(19) Europäisches Patentamt

European Patent Office

Office européen des brevets

(11) **EP 4 557 234 A1**

(12) **EUROPEAN PATENT APPLICATION**
published in accordance with Art. 153(4) EPC

(43) Date of publication:
**21.05.2025 Bulletin 2025/21**

(21) Application number: **23870618.8**

(22) Date of filing: **22.09.2023**

(51) International Patent Classification (IPC):
**G06V 10/70** (2022.01)

(52) Cooperative Patent Classification (CPC):
**G06Q 50/40; G06N 20/00**

(86) International application number:
**PCT/CN2023/120634**

(87) International publication number:
**WO 2024/067387 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.09.2022 CN 202211174138**

(71) Applicant: **Deepal Automobile Technology Co.,
Ltd.
Chongqing 401133 (CN)**

(72) Inventors:
• **LI, Xiaoguang
Chongqing 401135 (CN)**

• **DIAO, Guantong
Chongqing 401135 (CN)**
• **ZHAI, Jun
Chongqing 401135 (CN)**
• **SU, Linke
Chongqing 401135 (CN)**
• **WAN, Yusen
Chongqing 401135 (CN)**

(74) Representative: **2K Patentanwälte Blasberg
Kewitz & Reichel
Partnerschaft mbB
Schumannstrasse 27
60325 Frankfurt am Main (DE)**

(54) **USER PORTRAIT GENERATION METHOD BASED ON CHARACTERISTIC VARIABLE SCORING, DEVICE, VEHICLE, AND STORAGE MEDIUM**

(57) Provided in the present application is a user portrait construction method based on characteristic variable scoring, comprising: collecting and acquiring driving travel and charging travel data of a vehicle, performing preprocessing, and, according to the attributes of the travel data, dividing same into four characteristic data sets of different dimensions; adding labels to the data in the data sets, and using binning operation to discretize characteristic variables; calculating the weight of evidence of each of the bins and a related prediction capability IV, and, according to the IV, picking out characteristic variables having high degrees of contribution to user portrait labels, so as to construct a multi-dimensional characteristic variable database; separately training a logistic regression model to generate models of different dimensions; testing the model of each dimension, and, by means of an ROC curve and scorecard conversion based on AUC values, performing evaluation and verification to obtain an optimal model; and, according to driving behavior habits of a user, classifying driving behavior characteristics of the user by using the optimal model, and, according to the classification result, scoring the driving behavior habits of the user, so as to generate a user portrait. The present application can effectively improve driving safety.

FIG. 2

Description

## TECHNICAL FIELD

This application relates to the field of computer information processing technologies, and in particular, to a method for constructing a user portrait based on a driving behavior preference.

## BACKGROUND

With rapid development of Internet technologies and information technologies, vast amounts of data are continuously being generated. A sufficient amount of data can directly present an overall picture of a user. Information such as the user's social attributes, consumption behavior, and living habits can be utilized to outline the user's basic characteristics and framework, establish corresponding symbolic labels, and enable precise targeting of the customer.

By establishing a vehicle usage portrait of the user, the user's behavior habit in a driving process is actually reflected, so as to grasp the user's preferences and provide personalized services for the user. Analysis of the vehicle usage portrait can help obtain user characteristics during driving such as speed preference, driving style, driving time preference, and driving proficiency. Based on the characteristics of the user, business personnel can quickly obtain information and knowledge of the user, discover significant vehicle usage characteristics, and gain inspiration for business development. User portraits may be further used to refine operations, and implement services such as fine-grained recommendation for users with different characteristics. In terms of data product application, user portraits are the basis of many data products, such as recommendation systems, advertisement systems, and intelligent push platforms.

In an existing method for constructing a user portrait, an interest, a preference, and a requirement of a user group are analyzed by collecting static information data and dynamic information data of the user, that is, attribute information data and behavior information data of the user. Alternatively, user groups are divided by using a user data modeling method such as clustering to analyze characteristics of each group. The preference and requirement of each user cannot be accurately measured.

Publication No.: CN111552926A, entitled "DRIVING BEHAVIOR EVALUATION METHOD AND SYSTEM BASED ON INTERNET OF VEHICLES AND STORAGE MEDIUM", discloses a driving behavior evaluation method and system based on the Internet of vehicles and a storage medium. The method includes the following steps. Step 1: Extract user behavior data from an Internet of vehicles database. Step 2: Repeatedly screen characteristic variables through stepwise regression until a most significant explanatory variable is screened out. Step 3: Perform variable binning on the characteristic variables, perform WOE conversion on the characteristic variables to complete independent variable construction, perform training by using a logistic regression model to obtain a trained model, and output variable parameters of the model. Step 4: Output, according to a score card conversion method, scores of variables in four dimensions: driving habit, charging habit, safety, and energy consumption, where a higher score indicates a better driving behavior. Step 5: Weight the scores of the variables in the four dimensions to obtain a final driving behavior score, perform grade conversion, and output a driving behavior grade. The present invention rates driving behavior comprehensively based on a driving habit, a charging habit, safety, and energy consumption.

Qualitative user portraits or statistical user portraits are used. Qualitative user portraits tend to ignore some users with unique characteristics, or excessively emphasize abnormal values that express unconventional viewpoints, making it challenging to articulate the criteria used for classifying users based on these analyses.

## SUMMARY

In view of the problem that the existing technology cannot accurately measure preferences and needs of each user to mark a preference portrait, this application proposes the following aspects.

According to an aspect of this application, the present invention proposes a scoring-based method for constructing a user portrait, including: collecting and obtaining driving trip and charging trip data of a vehicle, performing preprocessing on the obtained trip data, and dividing the data into characteristic variable datasets of four different dimensions based on trip data attributes; marking data in the datasets with positive and negative sample labels, and discretizing characteristic variables through a binning operation; calculating a weight of evidence value of each bin and a prediction capability IV value related to each characteristic variable, and performing ranking based on the IV value to select a characteristic with a large contribution to a user portrait label to construct a characteristic variable database; selecting characteristic variables in the characteristic variable dataset, dividing the characteristic variables into a training set and a test set, training a logistic regression model by using characteristic variables in all dimensions of the training set separately, and generating models of different dimensions after completing the training; testing the models of corresponding dimensions by using test set data, using an ROC curve and an AUC value for user portrait scoring through score card conversion, and performing evaluation and checking to obtain an optimal model; and classifying user driving behavior characteristics by using the optimal model, and scoring the user driving behavior habits based on a classification result to generate a user portrait.

Further preferably, the dividing the data into characteristic variable datasets of four different dimensions based on trip data attributes includes: constructing, based on the trip data attributes, a multi-dimensional characteristic data table that includes four dimensions: driving habit, charging habit, safety, and energy consumption, where the multi-dimensional characteristic data table includes a plurality of characteristics, characteristic variables of characteristics in each dimension, and variable descriptions.

Further preferably, the preprocessing the obtained trip data includes: filling a missing null value and filtering abnormal data, which specifically includes: filling a missing value NAN in a dataset with 0; and deleting an abnormal value and extremum data by using a $3\sigma$ criterion.

Further preferably, the $3\sigma$ criterion is to extract data in an interval of $(\mu-\sigma, \mu+\sigma)$ as characteristic data based on a mean $\mu$ and a standard deviation $\sigma$ of the collected trip data, to filter out data outside the interval.

Further preferably, the characteristic variables in the multi-dimensional characteristic data table in the preprocessed dataset are marked with 1 and 0 at a preset ratio to obtain characteristic variables marked with positive and negative sample labels in a dataset in each dimension, to generate characteristic sample datasets with positive and negative sample labels in a plurality of dimensions.

Further preferably, the characteristic variable values of the characteristics in all dimensions are ranked, data in a predetermined part with a higher ranking is used as a negative sample, and data in a predetermined part with a lower ranking is used as a positive sample. The positive sample is marked as 1, and the negative sample is marked as 0.

Further preferably, the calculating a weight of evidence value of each bin and a prediction capability IV value related to each characteristic variable specifically includes: according to a positive sample proportion p and a negative sample proportion n of each characteristic in the characteristic dataset in each dimension, invoking a formula:

$$IVi = \sum_{i=1}^{N} (p - n) * WOE_i$$

$WOE = \ln(p/n)*100\%$, to calculate a weight of evidence WOE; according to a formula: , calculating an information volume $IV_i$ of the $i^{th}$ characteristic variable, and constructing a relationship table between an information volume IV value and a prediction capability, where N is a quantity of characteristic variables, and $WOE_i$ is a weight of evidence of the $i^{th}$ characteristic variable.

Further preferably, the selecting a characteristic with a large contribution to a user portrait label to construct a characteristic variable database includes: invoking a relationship table between an IV value and a prediction capability, selecting characteristic variables whose IV >= 0.1 as characteristic samples in the multi-dimensional characteristic variable database, and dividing the characteristic samples into a training set and a test set at a preset ratio.

Further preferably, an AUC value of an ROC curve of the model for characteristics in each dimension is calculated and evaluated according to a result predicted by the model, score conversion is performed through score card conversion based on the AUC value to obtain a ratio of a good user to a bad user and weights of characteristic variables corresponding to different bins, and an optimal model in each dimension is obtained; and with reference to the weight of evidence of each bin in the characteristic variable and the ratio of a good user to a bad user, coefficients A and B corresponding to scores at a preset ratio are determined, to calculate a score result of each bin.

Further preferably, the test set sample is input into a corresponding model for characteristics in each dimension for testing, a quantity of positive classes and a quantity of negative classes are determined according to prediction accuracy, a true positive rate TPR is calculated according to a formula $TPR = TP/(TP + FN)$, a false positive rate FPR is calculated according to a formula $FPR = FP/(TN + FP)$, the true positive rate TPR is used as a vertical axis, the false positive rate FPR is used as a horizontal axis, corresponding coordinate points are obtained with different thresholds, the coordinate points are connected to obtain an ROC curve, and a user portrait score is obtained according to an AUC value of an area under the ROC curve through score card conversion, where TP is a true positive class, FN is a false negative class, FP is a false positive class, and TN is a true negative class.

Further preferably, a score at a preset point with a ratio of $\theta_0$ is set to $P_0$, a score at a point with a ratio of $2\theta_0$ is set to $P_0+PDO$, coefficients A and B corresponding to scores at a preset point are calculated according to a formula

$$B = \frac{PDO}{\ln 2}$$

, and a score scale is calculated according to a formula $score_{total} = A = P_0 - B\ln(\theta_0)\ A + B *\ _{\ln}(odds)$, where odds is a ratio of a bad user probability to a good user probability.

Further preferably, $(B*w_n)*WOE_{n1}+(B*w_n)*WOE_{n2} +\cdots+(B*w_n)*WOE_{ni}$, a user driving behavior score in a characteristic dimension is calculated to obtain a user driving behavior habit score in each dimension, and the user driving behavior habit is rated according to comparison between the score and a specified threshold range, to generate a user portrait label, where $w_n$ represents a weight of the $n^{th}$ characteristic variable, and $WOE_{ni}$ represents a weight of evidence value of the $i^{th}$ bin of the $n^{th}$ characteristic variable.

According to a second aspect of the present invention, an electronic device is further provided, including:

a processor; and a memory for storing a program, where the program includes instructions, and when being executed by the processor, the instructions cause the processor to perform the scoring-based method for constructing a user portrait according to any one of the foregoing aspects.

According to a third aspect of the present invention, a non-transitory computer-readable storage medium storing computer instructions is further provided, where the computer instructions are used to cause a computer to perform the scoring-based method for constructing a user portrait according to any one of the foregoing aspects.

According to a fourth aspect of the present invention, a vehicle is further provided, including the electronic device according to the present invention and a central control device.

According to one or more technical solutions provided in the embodiments of this application, a technical effect of constructing a user portrait based on a score card can be implemented. The method using a score card can accurately measure a user preference requirement without ignoring a unique characteristic of the user, further enhance interpretability of a user classification standard by controlling a weight of a variable, and quantitatively mark the user portrait accurately according to a driving behavior habit, thereby improving driving safety and comfort.

## BRIEF DESCRIPTION OF DRAWINGS

FIG. 1 is a schematic diagram of a method for generating a user portrait based on a driving behavior preference according to an example embodiment of this application; and

FIG. 2 is a structural block diagram of a principle for generating a user portrait based on a driving behavior preference according to this application.

## DESCRIPTION OF EMBODIMENTS

In the following description of example embodiments with reference to the accompanying drawings, further details, features, and advantages of this application are disclosed.

The following describes embodiments of this application in more detail with reference to the accompanying drawings. Although some embodiments of this application are shown in the accompanying drawings, it should be understood that this application may be implemented in various forms, and should not be construed as being limited to the embodiments described herein. Instead, these embodiments are provided for a more thorough and complete understanding of this application. It should be understood that the accompanying drawings and the embodiments of this application are merely used as examples, and are not intended to limit the protection scope of this application.

It should be understood that steps recorded in the method implementations of this application may be performed in different sequences, and/or performed in parallel. In addition, the method implementation may include additional steps and/or omit the steps shown. The scope of this application is not limited in this aspect.

The term "include" and variations thereof as used herein denote an openended inclusion, meaning "include but not limited to". The term "based on" is "based at least in part on". The term "one embodiment" represents "at least one embodiment"; the term "another embodiment" means "at least one further embodiment"; and the term "some embodiments" represents "at least some embodiments". Definitions of other terms are provided in the following description. It should be noted that the concepts such as "first" and "second" mentioned in this application are merely used to distinguish between different apparatuses, modules, or units, and are not used to limit a sequence or an interdependence of functions performed by these apparatuses, modules, or units.

It should be noted that modifiers "one" and "a plurality of" mentioned in this application are examples and impose no limitation, and a person skilled in the art should understand that, unless otherwise specified in the context, the modifiers are understood as "one or more".

Names of messages or information exchanged between a plurality of apparatuses in the implementations of this application are only used for description, and are not used to limit a range of these messages or information.

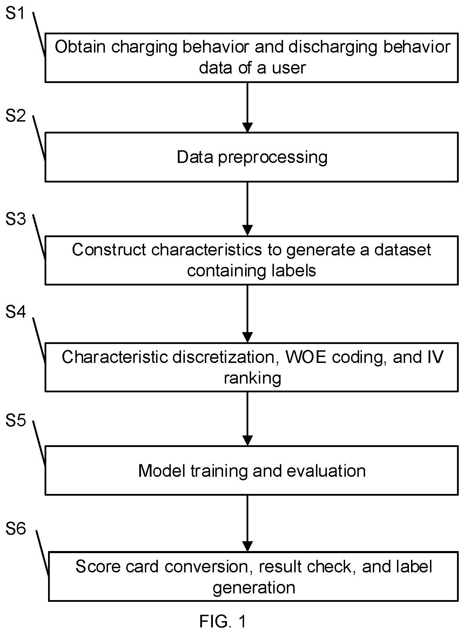

The following further describes the solutions of this application with reference to the accompanying drawings. As shown in FIG. 1, FIG. 1 is a schematic flowchart of a method for constructing a user portrait according to an embodiment of the present invention. The method includes: obtaining driving trip data and charging trip data; performing data preprocessing; constructing characteristics to generate a dataset containing labels; performing characteristic discretization, WOE coding, and IV ranking; performing model training and evaluation; and performing score card conversion, result checking, and label generation.

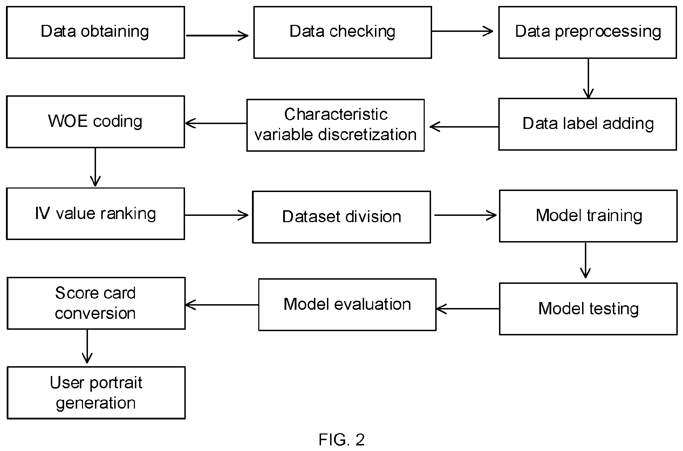

FIG. 2 is a block diagram of a principle for generating a user portrait based on a driving behavior preference according to an embodiment of the present invention. The principle includes: data obtaining, data checking, data preprocessing, data label adding, characteristic variable discretization, WOE coding, IV value ranking, dataset division, model training, model testing, model evaluation, score card conversion, and user portrait generation.

Driving trip and charging trip data of a vehicle are obtained through data collection by a vehicle central control instrument; whether there is a null value and abnormal data beyond a normal range in the data is checked; if null value data exists, 0 is used to fill the null value; if abnormal value data exists, the $3\sigma$ rule is used to delete the abnormal value; preprocessed data is labelled with a positive/negative sample to generate a dataset with a label; the characteristic variables are discretized through a binning operation; a WOE value is calculated, and an independent variable is constructed through WOE conversion; an IV value of each characteristic variable is calculated, and characteristic variable screening is completed based on IV value ranking; the dataset is divided into a training set and a test set; the training set data is used to train a logistic regression model in a cross-verification manner; the test set is tested by using the model that has undergone the training; accuracy of the model is evaluated and checked by using an ROC curve and an AUC value, to obtain an optimal model; each user is scored according to a classification result of user driving behavior characteristics by using a score card conversion method; and driving and charging behavior habits of the user are evaluated based on the score, to generate the user portrait.

A data collection unit of the vehicle central control device obtains all trip data of driving trip and charging trip of the vehicle. A multi-dimensional characteristic data table that includes four dimensions, that is, a driving habit, a charging habit, safety, and energy consumption, is constructed according to data characteristic attributes. The multi-dimensional characteristic data table includes a plurality of characteristics, and a characteristic variable and a variable description that are included in each dimension characteristic are shown in the following Table 1 to Table 4.

Table 1: Driving habit dimension characteristic table

| Characteristic variable name | Variable description |
|---|---|
| Accelerator pedal standard deviation | Within-trip accelerator pedal standard deviation |
| Brake pedal standard deviation | Within-trip brake pedal standard deviation |
| Speed standard deviation | Within-trip speed standard deviation |
| Average speed | Within-trip average speed |
| Accelerator pedal average value | Within-trip accelerator pedal average value |
| Brake pedal average value | Within-trip brake pedal average value |
| Average motor speed | Average motor speed |
| Average angular velocity | Average angular velocity |
| ... | ... |

Table 2: Charging habit dimension characteristic table

| Variable name | Variable description |
|---|---|
| Minimum power | Minimum power battery level in a cycle |
| Start charging SOC | SOC value at the start of charging |
| End charging SOC | SOC value at the end of charging |
| Fast charging times/proportion | Times/proportion of fast charging |
| Slow charging times/proportion | Times/proportion of slow charging |
| Overcharging times/proportion | Times/proportion of overcharging |
| ... | ... |

Table 3 Safety dimension characteristic table

| Characteristic variable name | Variable description |
|---|---|
| Steering wheel vibration status | Steering wheel vibration frequency |
| Driver handoff times | Driver handoff times during the trip |
| Number of seat belts | Number of seat belt violations |
| Average speed | Average speed |
| Peak speed | Maximum speed |

(continued)

| Characteristic variable name | Variable description |
|---|---|
| Accelerator pedal peak | Maximum accelerator pedal |
| ... | ... |

Table 4 Energy consumption dimension characteristic table

| Characteristic variable name | Variable description |
|---|---|
| Accelerator pedal standard deviation | Within-trip accelerator pedal standard deviation |
| Brake pedal standard deviation | Within-trip brake pedal standard deviation |
| Speed standard deviation | Within-trip speed standard deviation |
| Number of accelerator pedal presses per 100 km | Number of accelerator pedal presses/kilometers * 100 |
| Number of brake pedal presses per 100 km | Number of brake pedal presses/kilometers * 100 |
| Average speed | Within-trip average speed |
| Accelerator pedal average value | Within-trip accelerator pedal average value |
| Brake pedal average value | Within-trip brake pedal average value |
| Average air conditioning setting temperature | Average air conditioning setting temperature during the trip |
| Average temperature | Average outdoor temperature during the trip |
| ... | ... |

The collected characteristic data of each dimension is preprocessed. The data preprocessing includes: checking whether there is a null value or abnormal data beyond a normal range in the data.

The collected driving and charging trip data usually includes noise data. The noise data causes model prediction deviation. First, whether collected charging and discharging behavior data includes noise data such as a null value and abnormal data beyond a normal range is checked. Data cleaning such as filling the detected missing null value and filtering abnormal data is performed.

The presence of a missing value affects the data analysis and mining effect. The missing value NAN is an indicator value that is missing in some observations in the dataset.

Common methods for filling missing values include mean or mode filling; directly filling based on linear regression of non-missing data, where good filling results in collinearity, and poor filling is of no value; and excluding or setting variables. In the present invention, 0 is used to fill a missing value NAN in a dataset.

The $3\sigma$ criterion is used to delete the abnormal value and extremum data. All the characteristics in each dimension conform to normal distribution. According to a mean $\mu$ and a standard deviation $\sigma$ of each characteristic, the distribution of the characteristic data complies with the $3\sigma$ rule:

A probability that a value is distributed in is 0.6827, a probability that a value is distributed in $(\mu\text{-}2\sigma, \mu\text{+}2\sigma)$ is 0.9545, and a probability that a value is distributed in $(\mu\text{-}3\sigma, \mu\text{+}3\sigma)$ is 0.9973. Therefore, it may be considered that values of the characteristic data are almost concentrated in a range of $(\mu\text{-}3\sigma, \mu\text{+}3\sigma)$, and a value outside this range is mostly noise data. Therefore, the characteristic data in the range of $(\mu\text{-}\sigma, \mu\text{+}\sigma)$ is extracted, and data outside this range is filtered out.

To construct the characteristic dataset, the multi-dimensional characteristic data table is invoked, and the preprocessed driving trip and charging trip data are marked as characteristics of four different dimensions of driving habit, charging habit, safety, and energy consumption according to characteristic attributes. Positive and negative sample labels are marked on the characteristic dataset, so as to generate the multiple-dimensional characteristic sample datasets that include the positive and negative sample labels. Positive and negative sample characteristic data is used as input variables for training, verifying, and predicting the models.

The characteristic data of each dimension in the dataset is divided into positive and negative samples, which are marked with 0 and 1 to obtain characteristic variables of each dimension in the dataset, to generate a dataset that includes the positive and negative sample labels. In this embodiment, a method for dividing a positive sample and a negative sample may be: the characteristic variable values of the characteristics in all dimensions are ranked, data in a predetermined part with a higher ranking is used as a negative sample, and data in a predetermined part with a lower ranking is used as a positive sample. The positive sample is marked as 1, and the negative sample is marked as 0.

For example, a driving habit characteristic includes a driving vehicle speed standard deviation, an accelerator pedal depression depth standard deviation, and the like. For example, the first 20% of the single trip data with the highest speed standard deviation and accelerator pedal depth standard deviation may be selected as a negative sample and marked as 0, and the last 20% is used as a positive sample and marked as 1.

The safety characteristic includes driving duration and a peak speed when the vehicle is traveling. Driving trip data is ranked based on driving duration and peak speeds, data ranked the first 20% is a negative sample and is marked as 0, and data ranked the last 20% is a positive sample and is marked as 1.

The energy consumption characteristic includes energy consumption per 100 kilometers when the vehicle is traveling, and the like. The energy consumption per 100 kilometers in the driving trip is used for ranking. The first 20% with the highest energy consumption is used as a negative sample and is marked as 0, and the first 20% with the lowest energy consumption is used as a positive sample and is marked as 1.

Charging habit characteristics include a power battery level, power charged in the fast charging mode, and the like. The charging trip data is grouped and counted by week, and then the data is ranked in ascending order of power battery levels and in descending order of power charged in the fast charging mode. Data ranked the first 20% is used as a negative sample and is marked as 0, and data ranked the last 20% is a positive sample and is marked as 1.

The first or last 20% in terms of an indicator is a positive or negative sample, and another proportion can be used according to experience.

All characteristics in each dimension characteristic dataset are divided into a positive sample set and a negative sample set as described above.

Among the characteristics in the multi-dimensional characteristic data table, some characteristics can fully reflect the habits and preferences of drivers and make great contributions to marking user portraits, while some characteristics are little affected by user behavior habits and preferences and make less contribution to marking user portraits. Therefore, it is necessary to find a characteristic that has a value to impact on a result, select a characteristic with a high contribution, perform discretization processing on the characteristics in the database, and calculate weight of evidence WOE coding and IV information value rankings.

In this embodiment, the characteristic variables are discretized through a binning operation, and then WOE coding conversion is performed to complete independent variable construction. The WOE indicates the difference between "the proportion of negative samples in a current group to all negative samples" and "the proportion of positive samples in the current group to all positive samples". A greater WOE indicates a greater difference and a higher probability of negative samples in this group. A smaller WOE indicates a smaller difference and a lower probability of negative samples in this group.

The following formula is invoked according to a positive sample proportion and a negative sample proportion in each dimension characteristic dataset:

$WOE = \ln(p/n)*100\%$, where p represents a positive sample proportion of each characteristic, and n represents a negative sample proportion of each characteristic. The weight of evidence WOE is calculated.

IV values of the characteristic variables are calculated, ranking is performed according to the IV values, and the characteristic variables are screened. IV measures an information amount of a characteristic variable. According to the following formula:

$$IVi = \sum_{i=1}^{N}(p-n)*WOE_i$$

, an information amount IVi of the ith characteristic variable is calculated, and represents a prediction capability of each variable. Here, p represents a positive sample proportion of each characteristic, n represents a negative sample proportion of each characteristic, N is a quantity of characteristic variables, and $WOE_i$ is a weight of evidence of the ith characteristic variable.

In this embodiment, a relationship table between an information volume IV value and a prediction capability is constructed according to a large amount of experimental data analysis and empirical values. Table 5 shows:

Table 5: Relationship table between an IV value and a prediction capability

| IV | Prediction capability |
|---|---|
| <0.03 | No prediction capability |
| 0.03-0.09 | Low |
| 0.1-0.29 | Medium |
| 0.3-0.49 | High |
| >=0.5 | Extremely high |

The relationship table between an IV value and a prediction capability is invoked to determine a characteristic variable in each dimension database training sample set, that is, an element in the characteristic database.

In this embodiment, a characteristic variable with a prediction capability greater than or equal to "medium" in the prediction table may be selected, that is, a characteristic variable whose IV >= 0.1 is selected as the characteristic variable in the multi-dimensional database sample set.

For example, an IV value of each characteristic variable is calculated according to the weight of evidence, and the characteristic variable with a prediction capability greater than or equal to "medium" is selected according to the IV value, to obtain characteristic variables in all dimensions of the sample set in this embodiment, which include:

Driving habit characteristics: average speed, accelerator pedal average value, average motor speed, average angular velocity, average motor torque, average energy consumption in traveling, idle speed proportion, low speed proportion, medium speed ratio, and high speed proportion.

Safety characteristics: Average speed, high speed proportion, number of accelerator pedal presses per 100 km, number of brake pedal presses per 100 km, and peak speed.

Energy consumption characteristics: Air conditioner on/off proportion, medium speed proportion, average air conditioning setting temperature, accelerator pedal average value, number of accelerator pedal presses per 100 km, and number of brake pedal presses per 100 km.

Charging habit characteristics: Fast charging times/proportion, fast charging battery level, overcharging times/proportion, deep use times/proportion, and charging duration.

Samples in the dataset including the selected characteristic variables of all dimensions are divided into a training set and a test set according to a preset ratio (for example, in this embodiment, a ratio of 8:2 may be used). The training set is used for model training, and the test set is used for model testing.

The training set samples are input into a logistic regression model for training. The characteristic variables in the four different dimensions are used to separately train the model to generate characteristic models of the dimensions.

A logistic regression model belongs to a binary classification model. In this embodiment, an ROC curve and an AUC value are used in combination for evaluation. A cross-verification manner is used to test the characteristic model of each dimension generated after training by using the test set. The accuracy of the model is evaluated and checked by using area AUC values under the ROC sensitivity curve and the ROC curve.

The foregoing training and test processes are repeated until optimal parameters and models are obtained.

The ROC curve is a visual tool for comparing two classification models. The ROC curve shows a trade-off between a true positive rate (TPR) and a false positive rate (FPR) of a given model. A true positive rate TPR is used as a vertical axis, a false positive rate FPR is used as a horizontal axis. Corresponding coordinate points are obtained with different thresholds, and the coordinate points are connected to obtain an ROC curve.

The test set samples are input into a corresponding characteristic model of each dimension for testing, test result classification is compared with the sample label, and the quantity of positive classes and the quantity of negative classes are determined according to the prediction accuracy. One instance is a positive class, and is predicted as a positive class, that is, a true positive class TP; one instance is a positive class, but is predicted as a negative class, that is, a false negative class FN; one instance is a negative class, but is predicted as a positive class, that is, a false positive class FP; and one instance is a negative class, and is predicted as a negative class, that is, a true negative class TN. The foregoing quantity of classes is output according to prediction by the model. According to the following formula:

$TPR = TP/(TP + FN)$, a true positive rate TPR is calculated;
$FPR = FP/(TN+FP)$, a false positive rate FPR is calculated.

AUC indicates the area under the ROC curve. According to the industry standard, AUC > 0.7 is generally required. A larger AUC value indicates a better model.

Score conversion is performed based on the AUC value through score card conversion, and the score is controlled within 100.

For example, according to the formula:

$$odds = \frac{bad\ user\ probability}{good\ user\ probability} = \frac{p}{1-p},$$

a ratio (odds) of the user probability (1-p) to the bad user probability (p) is calculated.

The score scale set by the score card can be defined by expressing the score as a current expression of a ratio logarithm.

According to the formula $scor_{total} = A + B*\ln(odds)$, a total score is calculated and the score scale $\theta$ is determined. A score at a preset point with a ratio of $\theta$ is set to $P_0$, and a score at a point with a ratio of $2\theta$ is set to $P_0 + PDO$. $P_0$ and $PDO$ are constants, and are substituted into the foregoing formula to obtain:

$$P_0 = A + B \ln(\theta_0)$$

$$P_0 + PDO = A + B \ln(2\theta_0)$$

Coefficients A and B corresponding to the score at a preset point are calculated:

$$B = \frac{PDO}{\ln 2}$$

$$A = P_0 - B \ln(\theta_0)$$

According to a ratio of a good user probability to a bad user probability, a characteristic variable x obtained after WOE binning, a weight wi of the $i^{th}$ characteristic variable, where i = 1, 2, ..., n, and n represents a quantity of characteristic variables,

the following formula is invoked:

$score_{total} = A + B + (\theta^T x) = A + B * (w_0 + w_1 x_1 + \cdots + w_n x_n) = (A + B * w_0) + B * w_1 x_1 + \cdots + B * w_n x_n$, to calculate and output a total score of the characteristic variables.

The training set sample is used to train a logistic regression model multiple times, an AUC value of the ROC curve of the model is calculated and evaluated according to a classification result predicted by the model, and score conversion is performed according to the AUC value through score card conversion to obtain a good user probability value and a bad user probability value. Weights of characteristic variables corresponding to different bins may also be obtained during training of the model. An optimal model of each dimension is obtained.

With reference to the weight of evidence WOE of each bin in the characteristic variable and the good user probability value and the bad user probability value, the coefficients A and B corresponding to the scores at a preset ratio are determined, and the score result of each bin is calculated. For example, in this embodiment, a score corresponding to each variable is multiplied by a WOE of each bin in the variable, to obtain a score of each bin, that is, a score of the $i^{th}$ bin of the $n^{th}$ characteristic variable is calculated according to a formula $(B*w_n)*WOE_{ni}$.

The following table shows a table for calculation of weight scores of characteristic variables corresponding to different bins.

Table 6: Table for calculation of weight scores of characteristic variables corresponding to different bins

| Variable | Binning class | Score |
|---|---|---|
| Basic score | - | $(A + B * w_0)$ |
| $X_1$ | 1 | $(B * w_1) * WOE_{11}$ |
| | 2 | $(B * w_1) * WOE_{12}$ |
| | ... | ... |
| | i | $(B * w_1) * WOE_{1i}$ |
| $X_2$ | 1 | $(B * w_2) * WOE_{21}$ |
| | 2 | $(B * w_2) * WOE_{22}$ |
| | ... | ... |
| | j | $(B * w_2) * WOE_{2j}$ |
| ... | ... | ... |
| $X_n$ | 1 | $(B * w_n) * WOE_{n1}$ |
| | 2 | $(B * w_n) * WOE_{n2}$ |
| | ... | ... |
| | k | $(B * w_n) * WOE_{nk}$ |

All scores of all characteristic variables are added to obtain a score of a user behavior habit of a characteristic dimension. That is, according to the following formula:

$(B*w_n)*WOE_{n1}+(B*w_n)*WOE_{n2} +\cdots+(B*w_n)*WOE_{ni}$, a score of a user behavior habit of a characteristic dimension is calculated. $w_n$ represents a weight of the $n^{th}$ characteristic variable, and $WOE_{ni}$ represents the weight of evidence WOE value of the $i^{th}$ bin of the $n^{th}$ characteristic variable.

The characteristic variables of each dimension that are selected from user driving trip and charging trip data are obtained through a vehicle central control collection unit, user driving behavior scores are separately calculated according to the foregoing formula for different dimensions, to obtain user driving behavior habit scores of different dimensions, and the driving behavior habit is rated according to a specified threshold range.

After a large number of experiments and sample analysis, this embodiment sets a reasonable interval range for score rating, and scores are set within the interval of [60, 100]. Corresponding characteristic behaviors are divided according to the score interval range, to establish a characteristic behavior partition table, for example:

Driving behavior: [0, 60]: bad driving habit; [60, 70]: driving habit that needs to be improved; [70, 80]: fair driving habit; [80, 90]: good driving habit; and [90, 100]: excellent driving habit.

Charging habit: [0, 60]: charging habit that seriously harms the battery health; [60, 70]: charging habit that needs to be improved; [70, 80]: fair charging habit; [80, 90]: good charging habit; and [90, 100]: excellent charging habit.

A user portrait label is generated. The obtained score is compared with the score interval in the characteristic behavior partition table, and user driving and charging behavior habits are evaluated according to the scores, to generate a user portrait label.

An example embodiment of this application further provides an electronic device, including: at least one processor, and a memory that is communicatively connected to the at least one processor. The memory stores a computer program that can be executed by the at least one processor, and the computer program is used to cause the electronic device to perform the method according to the embodiments of this application when being executed by the at least one processor.

An example embodiment of this application further provides a non-transitory computer-readable storage medium storing a computer program, where the computer program is used to cause a computer to perform the method according to the embodiments of this application when being executed by a processor of the computer.

An example embodiment of this application further provides a computer program product, including a computer program. The computer program is used to cause a computer to perform the method according to the embodiments of this application when being executed by a processor of the computer.

The electronic device is intended to represent digital electronics computer devices in various forms, such as a laptop computer, a desktop computer, a workbench, a personal digital assistant, a server, a blade server, a mainframe computer, and another suitable computer. The electronic device may further represent mobile apparatuses in various forms, such as personal digital processing, a cellular phone, a smartphone, a wearable device, and another similar computing apparatus. The components shown in this specification, their connections and relationships, and their functions are merely examples and are not intended to limit the implementation of this application described and/or required in this specification.

Program code for implementing the method of this application may be written in one or any combination of a plurality of programming languages. The program code may be provided to a processor or controller of a general-purpose computer, a dedicated computer, or another programmable data processing apparatus, so that the program code is executed by the processor or controller, to enable the functions/operations specified in the flowchart and/or the block diagram to be implemented. The program code may be executed entirely on a machine, partly on a machine, partly on a machine as a stand-alone package and partly on a remote machine, or entirely on a remote machine or a server.

In the context of this application, the machine-readable medium may be a tangible medium, and the machine-readable medium may include or store a program for use by or in combination with an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any suitable combination of the foregoing content. A more specific example of the machine-readable storage medium may include an electrical connection based on one or more lines, a portable computer disk, a hard disk, a random access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the foregoing content.

**As** used in this application, the terms "machine-readable medium" and "computer-readable medium" refer to any computer program product, device, and/or apparatus (for example, a magnetic disk, an optical disc, a memory, or a programmable logic device (PLD)) that is configured to provide machine instructions and/or data to a programmable processor, including a machine-readable medium that receives machine instructions as machine-readable signals. The term "machine-readable signal" refers to any signal used to provide machine instructions and/or data to a programmable processor.

**To** provide interaction with a user, the systems and technologies described herein may be implemented on a computer having: a display apparatus (for example, a CRT (cathode ray tube) or LCD (liquid crystal display) monitor) configured to display information to the user; and a keyboard and a pointing apparatus (for example, a mouse or a trackball), where the user may provide input to the computer by using the keyboard and the pointing apparatus. Another type of apparatus may also be configured to provide interaction with a user. For example, a feedback provided to the user may be any form of sensing feedback (for example, visual feedback, auditory feedback, or tactile feedback); and input from the user may be received in any form (including sound input, voice input, or tactile input).

The systems and techniques described herein may be implemented in a computing system (for example, as a data server) including a background component, or a computing system (for example, an application server) including a middleware component, or a computing system (for example, a user computer having a graphical user interface or a web browser through which a user may interact with implementations of the systems and techniques described herein) including a front-end component, or a computing system including any combination of such a background component, a middleware component, or a front-end component. Components of the system may be interconnected through digital data communication (for example, a communication network) in any form or medium. Examples of the communication network include a local area network (LAN), a wide area network (WAN), and the Internet.

The computer system may include a client and a server. Clients and servers are generally far away from each other and typically interact with each other through a communication network. A client-server relationship is generated by computer programs running on a corresponding computer and having a client-server relationship with each other.

**Claims**

1.  A method for constructing a user portrait based on characteristic variable scoring, comprising:

    collecting and obtaining trip data of driving trip and charging trip of a vehicle, performing preprocessing on the trip data, and dividing the preprocessed trip data into characteristic datasets of four different dimensions based on trip data attributes;

    marking data in the characteristic datasets with positive and negative sample labels, and discretizing characteristic variables through a binning operation;

    calculating a weight of evidence value of each bin and a prediction capability IV value related to each characteristic variable, and performing ranking based on the IV value to select a characteristic variable with a large contribution to a user portrait label to construct a characteristic variable database of multi-dimensional;

    dividing the characteristic variables in the characteristic variable dataset into training set samples and test set samples, training a logistic regression model by using the training set samples separately, and generating models of different dimensions after completing the training;

    testing the models of corresponding dimensions by using the test set samples, using an ROC curve and an AUC value for evaluation and checking through score card conversion to obtain an optimal model; and

    classifying user driving behavior characteristics based on user driving behavior habits by using the optimal model, and scoring the user driving behavior habits based on a classification result to generate a user portrait.

2.  The method according to claim 1, wherein preprocessing the obtained trip data comprises: filling a missing null value and filtering abnormal data, which specifically comprises: filling a missing value NAN in the dataset with 0; and deleting an abnormal value and extremum data by using a $3\sigma$ criterion.

3.  The method according to claim 2, wherein the $3\sigma$ criterion is to extract data in an interval of $(\mu\text{-}\sigma, \mu\text{+}\sigma)$ as characteristic data based on a mean $\mu$ and a standard deviation $\sigma$ of the collected trip data, to filter out data outside the interval.

4.  The method according to claim 1, wherein dividing the data into characteristic variable datasets of four different dimensions based on trip data attributes comprises: constructing, based on the trip data attributes, a multi-dimensional characteristic data table that comprises four dimensions: driving habit, charging habit, safety, and energy consumption; wherein the multi-dimensional characteristic data table comprises a plurality of characteristics, characteristic variables of characteristics in each dimension, and variable descriptions.

5.  The method according to claim 4, wherein the characteristic variables in the multi-dimensional characteristic data table are marked with 1 and 0 at a preset ratio to obtain characteristic variables marked with positive and negative sample labels in the dataset in each dimension, to generate characteristic sample datasets with positive and negative sample labels in a plurality of dimensions.

6.  The method according to claim 4 or 5, wherein the characteristic variable values of the characteristics in all the dimensions are ranked, data in a predetermined part with a higher ranking is used as a negative sample, data in a predetermined part with a lower ranking is used as a positive sample, the positive sample is marked as 1, and the negative sample is marked as 0.

7. The method according to any one of claims 1 to 5, wherein calculating the weight of evidence value of each bin and the prediction capability IV value related to each characteristic variable specifically comprises: according to a positive sample proportion p and a negative sample proportion n of each characteristic in the characteristic dataset in each dimension, invoking a formula:
WOE = ln(p/*n*)∗100%, to calculate the weight of evidence WOE; according to a formula:

$$IVi = \sum_{i=1}^{N} (p - n) * WOE_i$$

, calculating an information volume $IV_i$ of an $i^{th}$ characteristic variable, and constructing a relationship table between an information volume IV value and a prediction capability, wherein N is a quantity of characteristic variables, and $WOE_i$ is a weight of evidence of the $i^{th}$ characteristic variable.

8. The method according to any one of claims 1 to 5, wherein an AUC value of an ROC curve of the model for characteristics in each dimension is calculated and evaluated according to a result predicted by the model, score conversion is performed based on the AUC value to obtain a ratio of a good user to a bad user and weights of characteristic variables corresponding to different bins, and an optimal model in each dimension is obtained; and with reference to the weight of evidence of each bin in the characteristic variable and the ratio of the good user to the bad user, coefficients A and B corresponding to scores at a preset ratio are determined, to calculate a score result of each bin.

9. The method according to any one of claims 1 to 5, wherein the test set sample is input into a corresponding model for characteristics in each dimension for testing, a quantity of positive classes and a quantity of negative classes are determined according to prediction accuracy, a true positive rate TPR is calculated according to a formula $TPR = TP/(TP + FN)$, a false positive rate FPR is calculated according to a formula $FPR = FP/(TN + FP)$, the true positive rate TPR is used as a vertical axis, the false positive rate FPR is used as a horizontal axis, corresponding coordinate points are obtained with different thresholds, the coordinate points are connected to obtain the ROC curve, and a user portrait score is obtained according to an AUC value of an area under the ROC curve through score card conversion, wherein TP is a true positive class, FN is a false negative class, FP is a false positive class, and TN is a true negative class.

10. The method according to claim 7, wherein selecting the characteristic with the large contribution to the user portrait label to construct the characteristic variable database comprises: invoking the relationship table between the IV value and the prediction capability, selecting characteristic variables whose IV >= 0.1 as characteristic samples in the multi-dimensional characteristic variable database, and dividing the characteristic samples into the training set and the test set at a preset ratio.

11. The method according to claim 8, wherein a score at a preset point with a ratio of $\theta_0$ is set to $P_0$, a score at a point with a ratio of $2\theta_0$ is set to $P_0 + PDO$, coefficients A and B corresponding to scores at the preset point are calculated according

$$B = \frac{PDO}{\ln 2}$$

to a formula $A = P_0 - B\ln(\theta_0)$ , and a score scale is calculated according to a formula $score_{total} = A + B * \ln(odds)$, wherein odds is a ratio of a bad user probability to a good user probability.

12. The method according to claim 7, wherein according to the formula:
$(B*w_n)*WOE_{n1} + (B*w_n)*WOE_{n2} + ... + (B*w_n)*WOE_{ni}$, a user driving behavior score in a characteristic dimension is calculated to obtain a user driving behavior habit score in each dimension, and the user driving behavior habit is rated according to comparison between the score and a preset threshold range, to generate a user portrait label, wherein $w_n$ represents a weight of a $n^{th}$ characteristic variable, and $WOE_{ni}$ represents a weight of evidence value of an $i^{th}$ bin of the $n^{th}$ characteristic variable.

13. An electronic device, comprising:
a processor; and a memory for storing a program, wherein the program comprises instructions, and when being executed by the processor, the instructions cause the processor to perform the method for constructing a user portrait according to any one of claims 1 to 12.

14. A non-transitory computer-readable storage medium, which stores computer instructions, wherein the computer instructions are used to cause a computer to perform the method for constructing a user portrait according to any one of claims 1 to 12.

15. A vehicle, comprising the electronic device according to claim 13.

S1

Obtain charging behavior and discharging behavior
data of a user

S2

Data preprocessing

S3

Construct characteristics to generate a dataset
containing labels

S4

Characteristic discretization, WOE coding, and IV
ranking

S5

Model training and evaluation

S6

Score card conversion, result check, and label
generation

FIG. 1

```
┌──────────────────┐      ┌──────────────────┐      ┌──────────────────┐
│  Data obtaining  │─────▶│  Data checking   │─────▶│ Data preprocessing│
└──────────────────┘      └──────────────────┘      └──────────────────┘
                                                              │
                                                              ▼
┌──────────────────┐      ┌──────────────────┐      ┌──────────────────┐
│   WOE coding     │◀─────│   Characteristic │◀─────│ Data label adding │
│                  │      │variable discretization│  │                  │
└──────────────────┘      └──────────────────┘      └──────────────────┘
         │
         ▼
┌──────────────────┐      ┌──────────────────┐      ┌──────────────────┐
│  IV value ranking│─────▶│ Dataset division │─────▶│  Model training  │
└──────────────────┘      └──────────────────┘      └──────────────────┘
                                                              │
                                                              ▼
┌──────────────────┐      ┌──────────────────┐      ┌──────────────────┐
│   Score card     │◀─────│ Model evaluation │◀─────│  Model testing   │
│   conversion     │      │                  │      │                  │
└──────────────────┘      └──────────────────┘      └──────────────────┘
         │
         ▼
┌──────────────────┐
│  User portrait   │
│   generation     │
└──────────────────┘
```

FIG. 2

## INTERNATIONAL SEARCH REPORT

| International application No. |
|---|
| **PCT/CN2023/120634** |

**A.  CLASSIFICATION OF SUBJECT MATTER**

G06V10/70(2022.01)i

According to International Patent Classification (IPC) or to both national classification and IPC

**B.  FIELDS SEARCHED**

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI; IEEE; 百度, BAIDU: 特征, 变量, 用户, 画像, 逻辑回归, 分数, 证据权重, 信息价值, feature, variable, user, portrait, logic regression, score, weight of evidence, WOE, information value, IV

**C.  DOCUMENTS CONSIDERED TO BE RELEVANT**

| Category* | Citation of document, with indication, where appropriate, of the relevant passages | Relevant to claim No. |
|---|---|---|
| PX | CN 115423035 A (CHONGQING CHANG'AN NEW ENERGY AUTOMOBILE TECHNOLOGY CO., LTD.) 02 December 2022 (2022-12-02) <br> paragraphs 7-117 | 1-15 |
| Y | CN 111552926 A (CHONGQING CHANG'AN NEW ENERGY AUTOMOBILE TECHNOLOGY CO., LTD.) 18 August 2020 (2020-08-18) <br> description, paragraphs 3-80 | 1-15 |
| Y | CN 114638688 A (JIANGSU URBAN AND RURAL CONSTRUCTION COLLEGE) 17 June 2022 (2022-06-17) <br> description, paragraphs 5-126 | 1-15 |
| Y | CN 111145883 A (YLZ INFORMATION TECHNOLOGY CO., LTD.) 12 May 2020 (2020-05-12) <br> description, paragraphs 4-165 | 1-15 |
| A | CN 111553563 A (STATE GRID ELECTRONIC COMMERCE CO., LTD. et al.) 18 August 2020 (2020-08-18) <br> entire document | 1-15 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 December 2023** | **21 December 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/120634** |

### C. DOCUMENTS CONSIDERED TO BE RELEVANT

| Category* | Citation of document, with indication, where appropriate, of the relevant passages | Relevant to claim No. |
|---|---|---|
| A | US 2019027253 A1 (ACCENTURE GLOBAL SOLUTIONS LTD.) 24 January 2019 (2019-01-24) entire document | 1-15 |

Form PCT/ISA/210 (second sheet) (July 2022)

## INTERNATIONAL SEARCH REPORT
### Information on patent family members

International application No.

**PCT/CN2023/120634**

| Patent document cited in search report | | | Publication date (day/month/year) | Patent family member(s) | Publication date (day/month/year) |
|---|---|---|---|---|---|
| CN | 115423035 | A | 02 December 2022 | None | |
| CN | 111552926 | A | 18 August 2020 | None | |
| CN | 114638688 | A | 17 June 2022 | None | |
| CN | 111145883 | A | 12 May 2020 | None | |
| CN | 111553563 | A | 18 August 2020 | None | |
| US | 2019027253 | A1 | 24 January 2019 | None | |

Form PCT/ISA/210 (patent family annex) (July 2022)

**EP 4 557 234 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111552926 A